## Europäisches Patentamt

(19) **European Patent Office** (11) Publication number: **0 112 030**

**Office européen des brevets** **B1**

(12) **EUROPEAN PATENT SPECIFICATION**

(45) Date of publication of patent specification: **29.07.87** (51) Int. Cl.⁴: **F 16 B 23/00**

(21) Application number: **83306841.4**

(22) Date of filing: **09.11.83**

(54) Rotatable fasteners.

<table>
<tr><td>(30) Priority: <b>09.11.82 GB 8231951</b></td><td>(73) Proprietor: <b>TITUS TOOL COMPANY LIMITED<br>Ridgeway Industrial Estate<br>Iver Buckinghamshire SL0 9HW (GB)</b></td></tr>
<tr><td>(43) Date of publication of application:<br><b>27.06.84 Bulletin 84/26</b></td><td></td></tr>
<tr><td>(45) Publication of the grant of the patent:<br><b>29.07.87 Bulletin 87/31</b></td><td>(72) Inventor: <b>Allen, John Douglas<br>44 Leam Crescent<br>Solihull West Midlands (GB)</b></td></tr>
<tr><td>(84) Designated Contracting States:<br><b>DE FR GB</b></td><td>(74) Representative: <b>Wright, Peter David John et al<br>R.G.C. Jenkins & Co. 12-15, Fetter Lane<br>London EC4A 1PL (GB)</b></td></tr>
<tr><td>(56) References cited:<br><b>DE-C- 625 159<br>DE-U-8 114 236<br>FR-A-2 077 763<br>FR-A-2 442 370<br>US-A-4 094 350</b></td><td></td></tr>
</table>

Courier Press, Leamington Spa, England.

**Description**

This invention concerns improvement in or relating to fasteners which have an axis about which they are rotated in order to operate, such as threaded fasteners.

It is known to use a tool having a flexible or articulated shaft to rotate a threaded fastener about an axis which is offset and/or inclined to an axis about which the handle of the tool is rotated. Such tools are useful for driving fasteners in inaccessible locations, but are expensive to manufacture.

In order to reduce the need to use such tools, it has been proposed to modify the design of the heads of certain socket head fasteners to permit the fasteners to be driven by an ordinary rigid shaft tool whilst the shaft axis is inclined slightly to the rotational axis of the fastener. However, the proposals involve an extra forming step in the process for manufacturing the fasteners, which extra step gives rise to serious additional labour and tooling costs, greatly increases the risks of production tolerances accumulating to increase the scrap or reject rates, and may introduce weaknesses into the head socket. Furthermore, the scope of the proposal is very restricted, and the proposal in turn restricts the design of the socket heads.

A screw design having a modified head for the above purchase is disclosed in AT—A—366156 and DE—U—8114236 but that design is undesirably expensive to produce.

Another screw design is known for the above purpose from US—A—4094350. That screw has a substantially curved passageway through its head and requires a specially designed driver tool having a hooked end which fits into the passageway to provide driving engagement between the driver and the screw.

The invention provides a rotatable fastener which is relatively inexpensive to produce, which can accept a considerable angular mis-alignment between the tool axis and the fastening axis, and yet which can be driven by a standard type of tool.

According to the present invention there is provided a fastener having an axis about which it is rotated in order to operate, and comprising a driving end portion having an end face formed with an opening therein adapted to accept the tip of a tool for rotating the fastener about is axis, the opening including a mouth shaped for driving engagement with the tool tip and an enlarged region below the mouth to accommodate movement of the extremity of the tool tip relative to the fastener when the tool is used at an angle to the fastener axis, characterised in that the mouth is surrounded by a peripheral region of the end face and in that the enlarged region is provided by a recess in the driving end portion of the fastener which extends to, and is open at, the periphery of the driving end portion.

The fastener can be made in a one step casting or moulding operation which is characterised, in accordance with the invention, by moulding or casting suitable material in a cavity defined in the shape of the fastener, including the recess, by mould parts which include a male recess-forming portion which extends laterally into the cavity, and releasing the fastener from the cavity by separating the mould parts.

The mould parts may include two main mould parts which separate on a plane which includes the fastener axis, one of said main mould parts including said male portion, which extends in the direction of separation of that mould part, and a further male mould part shaped to form said mouth and movable axially of the cavity up to and away from said male portion.

In the fastener of the invention the width and thickness of the recess may be determined independently of the shape, size and thickness of the mouth, so that each may be designed for optimum utility, and may be precisely and accurately made to give a reliable low-cost fastener which will accept relatively large angular misalignment between the fastener and tool axes.

The invention is preferably applied to fasteners adapted to be driven by tools having tapered fluted tips, e.g. of "Pozidriv" or "Philips" type.

The invention will be described further, by way of example, with reference to the accompanying diagrammatic drawings, wherein:—

Figures 1 and 2 show a fastener of the invention in side elevation and plan, respectively; and

Fig. 3 shows a cross section through the fastener on the line III—III of Figure 2.

The fastener comprises an externally threaded shank 10, of known form, and a driving end portion in the form of a head 11 at one end of the shank 10. The head 11 has an opening to receive a fluted tip 12 of a tool for rotating the fastener about a fastener axis 13 co-axial with the shank 10. The tip 12 is of a tapered form having four ribs 14.

The opening comprises a mouth 20 which extends axially into the head from an end portion 21 of the surface of the head and a recess 22 adjoining the mouth and formed in the head. The mouth 20 is of socket type, centred on the axis 13, and provides wall 23 shaped to provide abutments 24, which project towards the axis, and grooves 25 which project towards a periphery 26 of the head. The recess 22 extends transversely of the head from an entry 27 at the periphery 26, so as to be perpendicular to said axis 13 and disposed between the mouth 20 and the shank 10. The recess 22 is wider than the mouth 20 so as to provide a large undercut 28 beneath the wall 23, and the recess 22 provides a flat bearing surface 29 which confronts the mouth 20.

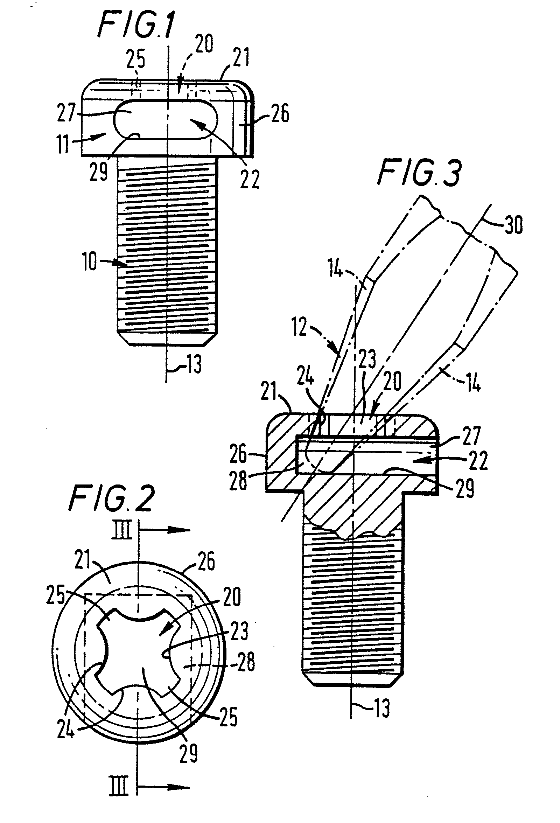

In use, the tip 12 can be inserted into the mouth 20 so that the axis 30 of the tool is aligned with the axis 13 or is at an angle of up to about 30° to 50° to the axis 13 (depending to some extent on the taper and shape of the tip 12) to cause the ribs 14 to enter the grooves 25 and engage the abutments 24 in a manner which is effective for permitting the fastener to be rotated about its axis 13 by rotating the tool about the tool axis 30. The undercut or enlarged region 28 permits the end of the tip to move in a circular path below the mouth so that large angular mis-alignments of over 20° to 25° between said axes 13 and 30 can be accepted, as indicated in Figure 3. Some tips may extend completely across the recess 22 from the mouth to the surface 29 so as to abut the latter. However, the smooth nature of the surface 29 permits the end of the tip to move freely in a circular path against the surface, without causing the tip to jerk or stick.

The fastener may be made conveniently in a one step casting or moulding operation using dies or moulds which are separable and serve to define a mould cavity or cavities, the or each of which cavities are formed in known manner to allow the fastener to be removed easily when the dies or moulds are separated. For making the fastener described herein, the dies or moulds are adapted to meet in a plane which includes the axis 13, and one of the dies or moulds is provided with a fixed male part which projects into the mould cavity perpendicular to said plane, for forming the recess 22. A retractable male part is mounted on one of the dies or moulds so as to be movable along said axis 13 to project into said cavity, from one end of the latter, so as to abut the fixed male part for forming the mouth.

The invention is not confined to the precise details of the foregoing example and many variations and modifications are possible within the scope of the invention. For example, the fastener may be made from any suitable metal, plastics or other material which can be moulded or cast. The shape and form of the fasteners may be varied as described, e.g. to the extent that the head and shank have a common diameter and thread to provide a stud form of fastener in which the head is vestigial and denoted merely by the presence of the socket. The shape of the driving opening, especially the mouth, may be varied to accept other forms of tool having fluted, ribbed or other types of tips of tapered or untapered form. For example, whilst the wall of the mouth is parallel to the fastener axis in any plane including said axis in the embodiment described, said wall may be inclined to said axis if required. Furthermore, the axial depth of the mouth is slightly less than the axial depth of the recess in said embodiment but may be greater, the same as, or very much less than the axial depth of the recess. The undercut may have rounded sides and may terminate below the peripheral ends of said grooves, but preferably extends radially outwards beyond said grooves.

## Claims

1. A fastener having an axis (13) about which it is rotated in order to operate, and comprising a driving end portion (11) having an end face formed with an opening therein adapted to accept the tip (12) of a tool for rotating the fastener about its axis, the opening including a mouth (20) shaped for driving engagement with the tool tip and an enlarged region (28) below the mouth to accommodate movement of the extremity of the tool tip relative to the fastener when the tool is used at an angle to the fastener axis, characterised in that the mouth is surrounded by a peripheral region of the end face and in that the enlarged region (28) is provided by a recess (22) in the driving end portion (11) of the fastener which extends to, and is open at, the periphery (26) of the driving end portion.

2. A fastener as claimed in claim 1 characterised in that said driving end portion is a head, the fastener has a threaded shank (10) extending axially away from the head, and said opening is located in the head.

3. A fastener as claimed in claim 1 or claim 2 which is formed by casting or moulding.

4. A method of making a fastener as claimed in claim 1 characterised by moulding or casting suitable material in a cavity defined in the shape of the fastener, including the recess, by mould parts which include a male recess-forming portion which extends laterally into the cavity, and releasing the fastener from the cavity by separating the mould parts.

5. A method as claimed in claim 4 characterised in that the mould parts include two main mould parts which separate on a plane which includes the fastener axis, one of said main mould parts including said male portion, which extends in the direction of separation of that mould part, and a further male mould part shaped to form said mouth and movable axially of the cavity up to and away from said male portion.

## Patentansprüche

1. Befestigungselement mit einer Achse (13), um die es bei Betätigung gedreht wird, und einem angetriebenem Endabschnitt (11), der eine Endfläche aufweist, die mit einer Öffnung versehen ist, die die Spitze (12) eines Werkzeugs zum Drehen des Befestigungselementes um seine Achse aufnehmen kann, wobei die Öffnung ein Maul (20), das zum Antriebseingriff mit der Werkzeugspitze ausgebildet ist, und einen vergrößerten Bereich (28) unterhalb des Mauls aufweist, um die Bewegung der äußersten Bereiche der Werkzeugspitze relativ zum Befestigungselement zuzulassen, wenn das Werkzeug unter einem Winkel bezüglich der Achse des Befestigungselementes verwendet wird, dadurch gekennzeichnet, daß das Maul von einem Umfangsabschnitt der Endfläche umgeben ist und daß der vergrößerte Bereich (28) von einer Ausnehmung (22) im angetriebenen Endabschnitt (11) des Befestigungselementes gebildet ist, die zum Umfangsbereich (26) des angetriebenen Endabschnitts verläuft und in diesem mündet.

2. Befestigungselement nach Anspruch 1, dadurch gekennzeichnet, daß der angetriebene Endabschnitt ein Kopf ist, daß das Befestigungselement einen mit einem Gewinde versehenen Schaft (10) aufweist, der axial vom Kopf weg verläuft, und daß die Öffnung in dem Kopf angeordnet ist.

3. Befestigungselement nach Anspruch 1 oder 2, dadurch gekennzeichnet, daß es mittels Gießens oder Pressens geformt ist.

4. Verfahren zur Herstellung eines Befestigungselementes gemäß Anspruch 1, gekennzeichnet durch das Pressen oder Gießen eines geeigneten Werkstoffes in einen Hohlraum, der von Formteilen, die einen vorstehenden, die Ausnehmung formenden Abschnitt, der quer in den Hohlraum hinein verläuft, aufweisen, in der Gestalt des Befestigungselementes einschließlich der Ausnehmung gebildet ist, und durch das Herauslösen des Befestigungselementes aus dem Hohlraum mittels Trennen der Formteile.

5. Verfahren nach Anspruch 4, dadurch gekennzeichnet, daß die Formteile zwei Hauptformteile umfassen, die in einer Ebene, die die Achse des Befestigungselementes beinhaltet, trennbar sind, wobei eines der Hauptformteile den vorstehenden Abschnitt aufweist, der in Trennungsrichtung des Formteils verläuft, und daß ein weiteres vorstehendes Formteil derart geformt ist, daß es das Maul ausbildet, und axial zum Hohlraum bis zum vorstehenden Abschnitt hin und weg von diesem bewegbar ist.

**Revendications**

1. Organe de fixation présentant un axe (13) autour duquel on le fait tourner pour qu'il exerce son action, et comprenant une partie terminale de manoeuvre (11) dans une face terminale de laquelle est ménagé un orifice adapté pour recevoir la pointe (12) d'un outil destiné à faire tourner l'organe de fixation autour de son axe, l'orifice comprenant une ouverture (20) conformée en vue d'une liaison d'entraînement avec la pointe de l'outil et une zone élargie (28) au-dessous de l'ouverture pour permettre un mouvement de l'extrémité de la pointe de l'outil vis-à-vis de l'organe de fixation lorsque l'outil est utilisé sous une certaine inclinaison par rapport à l'axe de l'organe de fixation, caractérisé en ce que l'ouverture est entourée par une zone périphérique de la face terminale, et en ce que la zone élargie (28) est pourvue d'un évidement (22) ménagé dans la partie terminale de manoeuvre (11) de l'organe de fixation, lequel évidement s'étend jusqu'à la surface périphérique (26) de la partie terminale de manoeuvre et débouche sur celle-ci.

2. Organe de fixation tel que défini dans la revendication 1, caractérisé en ce que ladite partie terminale de manoeuvre est une tête, l'organe de fixation possédant une tige filetée (10) qui s'étend axialement depuis la tête en s'éloignant de celle-ci, et ledit orifice est situé dans la tête.

3. Organe de fixation tel que défini dans la revendication 1 ou la revendication 2, qui est formé par coulage ou par moulage.

4. Procédé pour confectionner un organe de fixation tel qui défini dans la revendication 1, caractérisé en ce qu'il consiste à mouler ou à couler un matériau approprié dans une cacité définie, sous la configuration de l'organe de fixation incluant l'évidement, par des éléments de moule comportant une partie mâle de formage d'évidement qui s'étend latéralement à l'intérieur de la cavité, et à libérer l'organe de fixation de la cavité en séparant les éléments de moule.

5. Procédé tel que défini dans la revendication 4, caractérisé en ce que les éléments de moule incluent deux éléments de moule principal qui se séparent dans un plan comprenant l'axe de l'organe de fixation, l'un desdits éléments de moule principal comportant ladite partie mâle qui s'étend dans la direction de séparation de cet élément de moule, et un autre élément de moule mâle qui est profilé pour former ladite ouverture et qui peut être déplace le long de l'axe de la cavité jusqu'à ladite partie mâle et à partir de celle-ci.

*FIG.1*

25  20  21

27
11
29  26
22

10

13

*FIG.3*

30

14

12

24  23

21  20  14

26  27
28  22
29

13

*FIG.2*

III

21  26
25  20
23
28
24  25
29

III